# EUROPEAN PATENT SPECIFICATION

(11) **EP 2 502 501 B1**
(45) Date of publication and mention of the grant of the patent: **07.08.2013**
(21) Application number: 11159739.9
(22) Date of filing: 25.03.2011
(51) Int. Cl.: A23D 9/02, C11B 3/00, C11B 3/02, C11B 3/10, C11B 3/14

(54) **Plant oil refinement in the presence of alcohol**
Pflanzenölraffinierung in Gegenwart von Alkohol
Raffinement d'huile végétale en présence d'alcool

(43) Date of publication of application: 26.09.2012
(73) Proprietor: Nestec S.A., 1800 Vevey (CH)
(72) Inventor: Destaillats, Frederic, 1077, SERVION (CH); Nagy, Kornél, 1005, LAUSANNE (CH); Sandoz, Laurence, 1040, ECHALLENS (CH); Craft, Brian, 1815, Clarens (CH)
(74) Representative: Cogniat, Eric Jean Marie

(56) References cited:
- WO-A1-2009/115248
- WO-A1-2011/009843
- FRANKE K ET AL: "Influence of chemical refining process and oil type on bound 3-chloro-1,2-propanediol contents in palm oil and rapeseed oil", LEBENSMITTEL WISSENSCHAFT UND TECHNOLOGIE, ACADEMIC PRESS, LONDON, GB, vol. 42, no. 10, 1 December 2009 (2009-12-01), pages 1751-1754, XP026502436, ISSN: 0023-6438, DOI: DOI:10.1016/J.LWT.2009.05.021 [retrieved on 2009-05-27]

## Description

The present invention generally relates to the field of refined oils. In particular, the present invention relates to refined plant oils substantially free of chlorinated contaminants, such as monochloropropanediol (MCPD), in particular 3-MCPD di-esters, and to a process to produce such oils. To achieve this, at least one alcohol is added to the oil during refinement.

3-Halogen-1,2-propanediols, in particular 3-monochloro-1,2-propanediol (3-MCPD), are known contaminants in foods [Food Addit Contam. 2006, 23, 1290-1298]. A study indicates that 3-MCPD may be carcinogenic to rats if administered at high doses [Evaluation of Certain Food Additives and Contaminants, World Health Organization, Geneva, Switzerland 1993, pp. 267-285; Int J Toxicol. 1998, 17, 47.].

Refined bleached deodorized (RBD) vegetable oils have recently gained much attention due to the newly found existence of two potentially carcinogenic families of compounds called monochloropropanediol (MCPD). 3-MCPD was originally found in acid hydrolyzed vegetable protein (acid-HVP) [Z Lebensm-Unters Forsch. 1978, 167, 241-244]. Recently, it was found that refined edible oils may contain 3-MCPD in its fatty acid ester form, but only very little amounts of free 3-MCPD [Food Addit Contam. 2006, 23, 1290-1298]. Although there are presently no studies available on the toxicity of 3-MCPD-esters, the European Food Safety Authority (EFSA) recommends to treat 3-MCPD esters as free 3-MCPD in terms of toxicity [European Food Safety Authority 2008].

It is postulated that monochloropropanediol (MCPD) may arise from the chlorination of vegetable glycerides at very high temperatures, e.g., during the final step of the oil refining process, or deodorization, under which oils may be heated under vacuum (3-7 mbar) up to 260-270 °C.

Until now, little has been known as to the mechanisms through which this chlorination takes place, or the source of the incoming chlorine 'donor compounds'.

Currently, the presence of 3-MCPD in refined oils is carefully monitored and oils with a 3-MCPD content above a threshold value are discarded in order to ensure full compliance with EFSA recommendations.

As 3-MCPD may occur in many refined commercially important vegetable oils, there is a need in the art for further processes to avoid the generation of such contaminants during oil refining.

The present inventors have addressed this need.

Consequently, it was the object of the present invention to improve the state of the art and, in particular, to provide the art with a method to avoid any generation of 3-monochloro-1,2-propanediol (3-MCPD) esters in oil refinement.

This objective was achieved by the subject matter of the independent claims. The subject matter of the dependant claims further develops the idea of the present invention.

In particular, the present inventors describe a method through which MCPD esters generation during the process of oil refining can be substantially reduced or prevented completely.

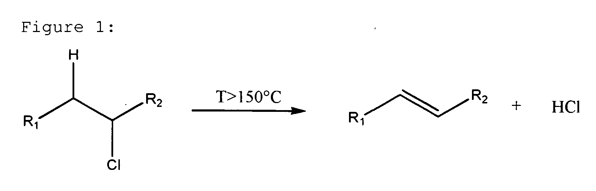

It has been well documented in the scientific literature that dehalogenation reactions can occur during thermal processes (see Figure 1). Chlorine has been shown to leave chemical components as hydrogen chloride (gas) upon the input of sufficient activation energy, which is abundant, e.g., during the deodorization of vegetable oils at high temperatures (up to 270 °C).

The present inventors believe that hydrogen chloride is evolved during oil refining from chlorine containing compounds inherently present in plant material.

Without wishing to be bound by theory, it is suggested that mechanistically, the invention works as follows:

### 1. Formation of MCPD di-esters

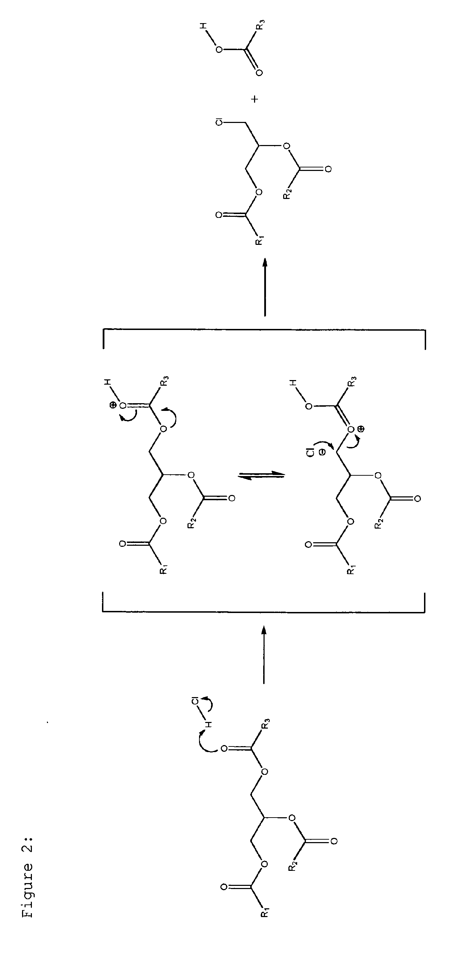

3-MCPD di-esters are the most abundant MCPD esters found in RBD oils. Their generation is initiated via the protonation of the terminal ester group of triacylglycerols (TAG), which represent about 88-95% of total glycerides in most vegetable oils, through interaction with hydrogen chloride evolved during oil refining as described in Figure 2. The formed oxonium cation can then undergo intramolecular rearrangement, followed by nucleophilic substitution of chloride ion and the release of a free fatty acid and a MCPD diester.

### 2. Use of an alcohol as a processing agent to prevent the chlorination of oil glycerides

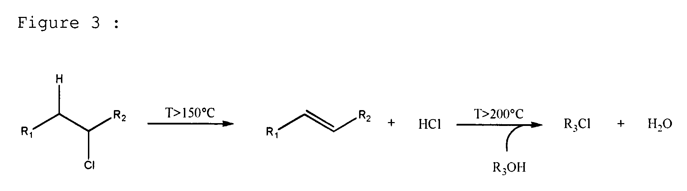

Hydrogen chloride can be captured using an alcohol, such as ethanol or glycerol, for example, before reacting with vegetable oil TAG or DAG (Figure 3). The addition of the alcohol therefore prevents the formation of MCPD diester.

Modern plant oil; e.g., vegetable oil; processing today is carried out by two predominant methods, chemical and physical refining.

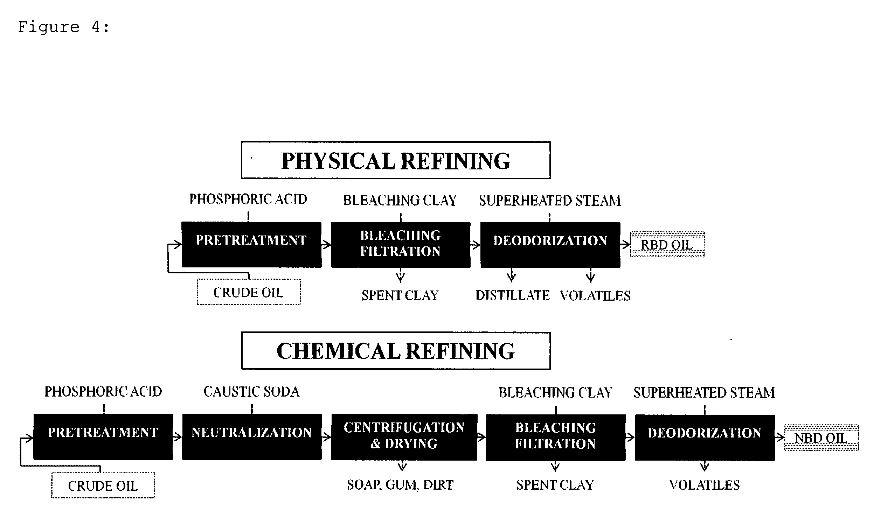

These two processes are schematically shown in Figure 4. In efforts aimed at increased sustainability, oil refineries have modified their vegetable oil processing lines in the past few decades for the minimization of energy expenditure (economizers) and the reduction of waste; however, the steps of these two refining processes have essentially remained the same.

Physical refining is essentially an abridged form of chemical refining and was introduced as the preferred method of palm oil refining in 1973. It is unique in that it is a three step continuous operation where the incoming crude oil is pretreated with acid (degumming), cleansed by being passed through adsorptive bleaching clay, and then subjected to steam distillation. This process allows for the subsequent deacidification, deodorization, and decomposition of carotenoids unique to palm oil (i.e. the crude oil is deep red in color, unlike other vegetable oils). Given the lack of neutralization step in physical refining, refined bleached (RB) oil produced from a physical refinery contains nearly the same free fatty acid (FFA) levels as found in the crude oil.

Neutralized bleached (NB) oil from a chemical refinery specifies a limit of 0.15% in the NB oil (0.10 in the RBD/NBD fully refined oils). NB and RB palm oil are very comparable pre-deodorization in every other aspect.

It has been well established that the deodorization step of oil refining (whether chemical or physical), is the step at which MCPD and glycidyl esters are generated; consequently, at the latest at this step in the oil refining process intervention must occur.

Literature suggests that MCPD generation reactions increase exponentially (> 150 °C) and goes to completion in a short time period.

The heat bleaching unit operation is the main source of loss in the oil refining process resulting in 20-40% reduction in oil volume post filtration. The process lasts about 30-45min and takes place under 27-33mbar vacuum at a temperature of 95-110 °C.

Heat bleached oil is then rerouted in piping to a deaerator that aides in the removal of dissolved gases, as well as moisture, before being sent to the deodorization tower. It is important to note that the majority of oil refining operations preheat the heat-bleached oil on the way to the deodorizer via heat exchange with outgoing oil from the deodorizer.

In one embodiment the inventors propose that while post heat bleaching, the oil undergoes a longer transit time on the way to the deodorizer, at which the oil will be maintained at 150-175 °C, an alcohol can be added directly to the oil in order to capture evolved hydrochloric acid.

This will result in chlorine trapped in compounds depending on the form of alcohol added and water.

Consequently, the present invention relates in part to a process to produce refined plant oil substantially free of monochloropropanediol (MCPD), in particular 3-MCPD di-esters, comprising a pre-treatment step, a bleaching step and a deodorization step, wherein an alcohol is added to the oil after the pre-treatment step.

Substantially free means that the concentration of monochloropropanediol (MCPD), in particular 3-MCPD di-esters, and/or glycidyl esters, in the refined, bleached, and/or deodorized oil is below 1 ppm.

The refined oil may be free of monochloropropanediol (MCPD), in particular 3-MCPD diesters.

The process of the present invention typically comprises a pre-treatment step, followed by a bleaching step and a subsequent deodorization step.

Typically, the pre-treatment step comprises pre-treating the crude oil with an acid, the bleaching step comprises heating the oil and cleaning the oil by passing it through adsorptive bleaching clay, and the deodorization step comprises a steam distillation.

The alcohol may be added to the oil at any stage after the pre-treatment step.

Typically, the alcohol is added to the oil in an amount sufficient to arrest all liberated hydrogen chloride.

For example, the alcohol may be added to the plant oil in a molar amount corresponding to about the 10-fold expected concentration of halogens, e.g., chlorine, in the oil.

In one embodiment the alcohol may be added to the oil in an amount corresponding to about 0.5 - 10 vol-%, for example about 1-5 vol-%, or about 2-3 vol-%.

Any alcohol may be used for the purpose of the present invention. Given the introduction of new chemistry into the oil refining process, selection of the alcohol to be added to the system is important. Alcohols which are naturally present in the plant material and/or the crude oil would be candidates. Alcohols may be chosen based on their boiling point or based on how easy it is to remove the alcohols and the resulting chlorinated compounds from the oil mixture.

For example, the alcohol may be selected from the group consisting ethanol, glycerol, 2-propanol, or combinations thereof.

The pre-treatment step in oil refining comprises pre-treating the crude oil with an acid. Adding the alcohol at this stage is possible, but might lead to an unwanted ester formation, reducing the effectiveness of the alcohol in chlorine trapping.

For example, the alcohol may be added to the oil at any stage after the pre-treatment step.

For example, the alcohol may be added to the oil during the bleaching step, for example during heating.

The heat bleaching process lasts about 30-45 min and takes place under 27-33 mbar vacuum at elevated temperatures of about 95-110 °C. The addition of an alcohol early in the process will allow the alcohol to be effective in trapping any free hydrogen chloride that might be generated already at comparatively low temperatures of about 100 °C.

The alcohol may also be added to the oil after the bleaching step but before the deodorization step. The deodorization step is the step that is carried out at the highest temperatures. Consequently, the risk to generate free hydrogen chloride is highest at this stage, and advantageously, the alcohol as trapping agent is added to the oil before deodorization takes place.

Oftentimes, the bleached oil is preheated on the way to the deodorization step, for example via heat exchange. The alcohol may be added to the bleached oil during the transit time from the bleaching step on the way to the deodorization step. This would allow that a chlorine capturing agent is already present during the heating stage. Any hydrogen chloride generated during the heating phase could be captured immediately.

Advantageously, generated chlorinated compounds (R₃ in figure 1), may be continuously removed from the process. The nature of these chlorinated compounds generated will depend on the kind of alcohol used. Typically, these chlorinated compounds are chlorinated alcohol derivatives. Such chlorinated alcohol derivatives may be ethyl chloride; 3-chloropropane-1,2-diol, 2,3-dichloropropan-1-ol, 1,3-dichloropropan-2-ol or 1,2,3-trichloropropane, or combinations thereof, for example.

This would allow for a constant removal of chlorine, and would also allow checking how much hydrogen chloride is produced at what step of the process, if any.

The process may also further comprise a neutralization step, a centrifugation step and/or a drying step after the pre-treatment step and before the bleaching step. Degumming is carried out with the aim to remove phosphatides. A neutralization step serves to remove of free fatty acids. Centrifugation will help to remove any unwanted solid particles and a drying step allows eliminating water fractions.

Any oil may be used in the process of the present invention. Preferably, the oil is a food grade oil. Vegetable oils may be used.

One application of the present invention relates to the refinement of plant oils, such as a palm oil, for example.

For example, the plant oil may be selected from the group consisting of palm oil, soybean oil, rapeseed oil, canola oil, sunflower oil, coconut oil, palm kernel oil, cottonseed oil, peanut oil, groundnut oil, or combinations thereof.

With the process of the present invention, the generation of monochloropropanediol (MCPD), in particular 3-MCPD di-esters, and/or glycidyl esters can essentially be avoided. For example, the refined plant oil processed according to the present invention may comprise less than 1 ppm, preferably less than 0.3 ppm of monochloropropanediol (MCPD), in particular 3-MCPD di-esters.

The scope of the present invention also extends to a refined plant oil obtainable by the process as described herein.

It is clear for those of skill in the art that they can freely combine features of the present invention without departing from the scope of the invention as disclosed.

Further advantages and features of the present invention are apparent from the following figures and example.
Figure 1 shows the generic mechanism of dehydrochlorination of organochlorines that can lead to the formation of hydrogen chloride during oil deodorization (R₁ and R₂ indicate substituents).
Figure 2 shows the mechanism for the formation of MCPD diester from TAG at high temperatures in the presence of trace amounts of hydrogen chloride.
Figure 3 shows the mechanism for reaction of an alcohol and hydrogen chloride at high temperature.
Figure 4 shows an outline of the processes for chemical and physical refining of vegetable oils.
Figure 5 shows the level of MCPD di-esters (palmitoyl-oleoyl-MCPD, dipalmitoyl-MCPD, dioleoyl-MCPD, palmitoyl-linoleyl-MCPD, oleoyl-linoleyl-MCPD) in RB palm oil deodorized in presence or not of alcohol such as ethanol or glycerol. Values reported are relative to internal standard.
Table 1 provided the liquid chromatographic gradient used for the separation of glycidyl esters, DAG, and TAG via ULC-MS/MS. Solvent A was 1 mM Ammonium-Formate in methanol, while solvent B was 100 µM Ammonium-formate in isopropanol.
Table 2. provided the single reaction monitoring (SRM) parameters of various analytes in the ULC-MS/MS system.

### Example:

### 1. Deodorization of palm oil in the presence of an alcohol

A 500mL total capacity bench-top glass vacuum stripping apparatus was utilized for RB palm oil deodorization experiments. This apparatus was equipped with a thermal-controlled heating mantle, 500mL oil vessel, thermal-regulated water bubbler, a distillation arm with a distillate trap (kept at ∼ -60 °C with dry ice immersed in isopropanol), and a high-vacuum pump with pressure controller and safety trap (kept at ∼ -180 °C with liquid nitrogen). RB palm oil samples were briefly warmed at 80°C in a convection oven to ensure homogeneity. For deodorization experiments, 200mL volumes of RB palm oil were deodorized with glycerol (1 weight%) or ethanol (1 weight%) in the aforementioned apparatus for 2h (3 h total residence time) at temperatures ranging from 180-240 °C with a constant pressure of 2 mbar. As control, RB sample was deodorized under the same experimental condition but without the addition of an alcohol.

### 2. Analysis of MCPD esters in palm oil by liquid-chromatography tandem mass-spectrometry

A ThermoFisher Accela 1250 system was used to perform ultra high performance liquid chromatography. A silica based octadecyl phase (Waters Acquity HSS C18, 1.7 µm; 2.1x150 mm) was found adequate for the separation of analytes using a buffered methanol-isopropanol gradient; gradient summarized in Table 1. A ThermoFisher TSQ Quantum Access Max mass spectrometer was used for the relative quantification MCPD esters. Electrospray ionization in positive ion mode followed by triple quadrupole-based tandem mass spectrometry was used to detect MCPD esters. Applied transitions for the Selected Reaction Monitoring (SRM) experiments are given in Table 2. For all transitions, a dwell time of 150 ms and span of 0.2 m/z were used.

### 3. Effect of alcohols on MCPD-diesters formation during RB palm oil deodorization

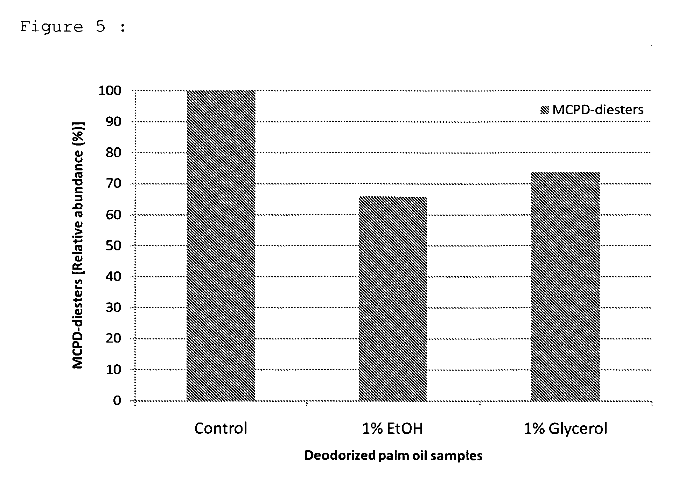

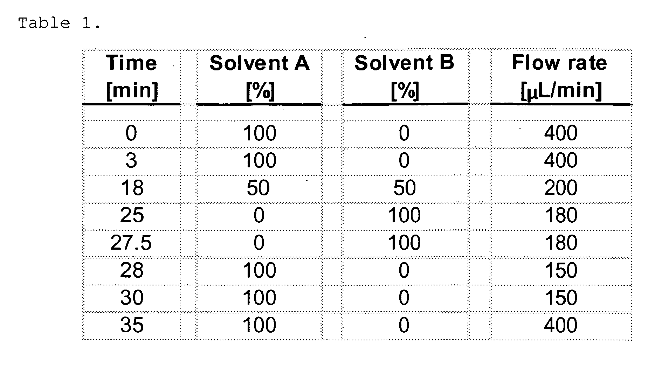

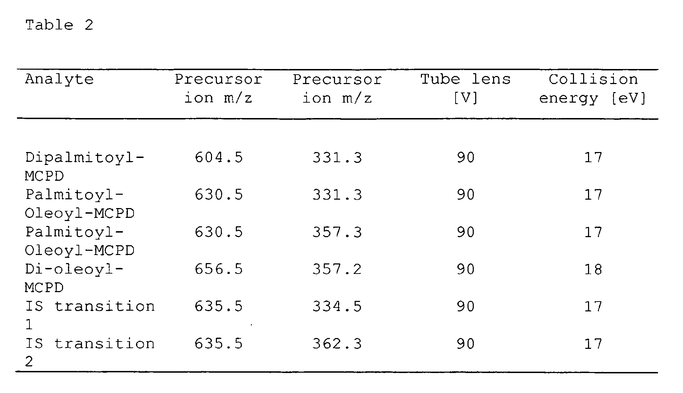

The RB palm oil samples were subjected to thermal treatment in presence of an alcohol at 235°C for 2h and MCPD esters were measured by LC-MS. RB palm oil was subjected to the same thermal treatment without the addition of an alcohol and used as a control to evaluate the efficiency of the addition of alcohol during heat treatment. Results provided in Figure 5, show that the addition of an alcohol during the heat treatment of palm oil significantly limits the formation of MCPD esters. There is no significant difference between ethanol/glycerol. We also observed that this reduction is dose-dependent for both ethanol and glycerol, 2.5% alcohol works better than 0.5%.

## Claims

1. Process to produce refined plant oil substantially free of monochloropropanediol (MCPD), in particular 3-MCPD diesters, comprising a pre-treatment step, a bleaching step and a deodorization step, **characterized in that** an alcohol is added to the oil after the pre-treatment step.

2. Process in accordance with claim 1, wherein the refinement comprises a pre-treatment step, a bleaching step and a deodorization step

3. Process in accordance with claim 2, wherein the pre-treatment step comprises pre-treating the crude oil with an acid, the bleaching step comprises heating the oil and cleaning the oil by passing it through adsorptive bleaching clay, and the deodorization step comprises a steam distillation.

4. Process in accordance with one of the preceding claims, wherein the alcohol is added to the oil in an amount of 0.5 - 10 vol-%, for example 1-5 vol-%, or 2-3 vol-%.

5. Process in accordance with one of the preceding claims, wherein the alcohol is selected from the group consisting ethanol, glycerol, 2-propanol or combinations thereof.

6. Process in accordance with one of the preceding claims, wherein the alcohol is added to the oil during the bleaching step, for example during heating.

7. Process in accordance with one of the preceding claims, wherein the alcohol is added to the oil after the bleaching step but before the deodorization step.

8. Process in accordance with one of the preceding claims, wherein the bleached oil is preheated on the way to the deodorization step, for example via heat exchange, and wherein the alcohol is added to the bleached oil during the transit time from the bleaching step on the way to the deodorization step.

9. Process in accordance with one of the preceding claims, wherein halogenated alcohol derivatives, such as ethyl chloride; 3-chloropropane-1,2-diol, 2,3-dichloropropan-1-ol, 1,3-dichloropropan-2-ol or 1,2,3-trichloropropaneare continuously removed from the process.

10. Process in accordance with one of the preceding claims, wherein the plant oil is a vegetable oil.

11. Process in accordance with one of the preceding claims, wherein the oil is selected from the group consisting of palm oil, soybean oil, rapeseed oil, canola oil, sunflower oil, coconut oil, palm kernel oil, cottonseed oil, peanut oil, groundnut oil, or combinations thereof.

12. Process in accordance with one of the preceding claims, wherein the refined, bleached, and/or deodorized oil comprises less than 1 ppm, preferably less than 0.3 ppm of monochloropropanediol (MCPD), in particular 3-MCPD diesters.

## Patentansprüche

1. Verfahren zur Herstellung von raffiniertem Pflanzenöl, das im wesentlichen frei von Monochlorpropandiol (MCPD) ist, insbesondere 3-MCPD Diestern, mit einem Vorbehandlungsschritt, einem Bleichschritt und einem Desodorierungsschritt, **dadurch gekennzeichnet, dass** dem Öl nach dem Vorbehandlungsschritt ein Alkohol hinzugefügt wird.

2. Verfahren nach Anspruch 1, wobei die Raffination einen Vorbehandlungsschritt, einen Bleichschritt und einen Desodorierungsschritt aufweist.

3. Verfahren nach Anspruch 2, wobei der Vorbehandlungsschritt das Vorbehandeln des Rohöls mit Säure, der Bleichschritt das Erhitzen des Öls und Reinigen des Öls aufweist, indem es durch adsorptive Bleicherde geführt wird, und der Desodorierungsschritt eine Dampfdestillation aufweist.

4. Verfahren nach einem der vorhergehenden Ansprüche, wobei der Alkohol dem Öl in einer Menge von 0,5 bis 10 Vol.-%, beispielsweise 1 bis 5 Vol.-% oder 2 bis 3 Vol.-% zugefügt wird.

5. Verfahren nach einem der vorhergehenden Ansprüche, wobei der Alkohol aus der Gruppe ausgewählt ist, die Ethanol, Glycerol, 2-Propanol oder Kombinationen daraus aufweist.

6. Verfahren nach einem der vorhergehenden Ansprüche, wobei Alkohol dem Öl während des Bleichschrittes, z.B. während des Erhitzens, hinzugefügt wird.

7. Verfahren nach einem der vorhergehenden Ansprüche, wobei Alkohol dem Öl nach dem Bleichschritt, aber vor dem Desodorierungsschritt, hinzugefügt wird.

8. Verfahren nach einem ^^der vorhergehenden Ansprüche, wobei das gebleichte Öl auf seinem Weg zu dem Desodorierungsschritt vorgewärmt wird, z.B. durch Wärmeaustausch, und wobei Alkohol dem gebleichten Öl während der Übergangszeit von dem Bleichschritt auf dem Weg zu dem Desodorierungsschritt hinzugefügt wird.

9. Verfahren nach einem der vorhergehenden Ansprüche, wobei halogenierte Alkoholderivate, wie beispielsweise Ethylchlorid, 3-Chlorpropan-1,2-diol, 2,3-Dichlorpropan-1-ol, 1,3-Dichlorpropan-2-ol oder 1,2,3-Trichlorpropan kontinuierlich aus dem Verfahren abgeschieden werden.

10. Verfahren nach einem der vorhergehenden Ansprüche, wobei das Pflanzenöl ein verzehrbares Pflanzenöl bzw. Speiseöl ist.

11. Verfahren nach einem der vorhergehenden Ansprüche, wobei das Öl aus der Gruppe ausgewählt ist, die Palmöl, Sojabohnenöl, Rüböl, Rapsöl, Sonnenblumenöl, Kokosnussöl, Palmkernöl, Baumwollsaatöl, Erdnussöl, oder Kombinationen daraus, aufweist.

12. Verfahren nach einem der vorhergehenden Ansprüche, wobei das raffinierte, gebleichte und/oder desodorierte Öl weniger als 1 ppm, vorzugsweise weniger als 0,3 ppm, Monochlorpropandiol (MCPD), insbesondere 3-MCPD Diester, aufweist.

## Revendications

1. Procédé de production d'une huile végétale raffinée sensiblement exempt de monochloropropanediol (MCPD), en particulier de diesters de 3-MCPD, comprenant une étape de prétraitement, une étape de blanchiment et une étape de désodorisation, **caractérisé en ce qu'**un alcool est ajouté à l'huile après l'étape de prétraitement.

2. Procédé selon la revendication 1, dans lequel le raffinage comprend une étape de prétraitement, une étape de blanchiment et une étape de désodorisation.

3. Procédé selon la revendication 2, dans lequel l'étape de prétraitement comprend le prétraitement de l'huile brute avec un acide, l'étape de blanchiment comprend le chauffage de l'huile et le nettoyage de l'huile en la passant au travers d'un argile blanchissant et absorbant, et l'étape de désodorisation comprend une distillation à la vapeur.

4. Procédé selon l'une des revendications précédentes, dans lequel l'alcool est ajouté à l'huile dans une quantité de 0.5 à 10% en volume, par exemple de 1 à 5% en volume ou de 2 à 3% en volume.

5. Procédé selon l'une des revendications précédentes, dans lequel l'alcool est sélectionné dans le groupe constitué d'éthanol, de glycérol, de 2-propanol ou de combinaisons de ces derniers.

6. Procédé selon l'une des revendications précédentes, dans lequel l'alcool est ajouté à l'huile pendant l'étape de blanchiment, par exemple pendant le chauffage.

7. Procédé selon l'une des revendications précédentes, dans lequel l'alcool est ajouté à l'huile après l'étape de blanchiment mais avant l'étape de désodorisation.

8. Procédé selon l'une des revendications précédentes, dans lequel l'huile blanchie est préchauffée sur le chemin vers l'étape de désodorisation, par exemple par l'intermédiaire d'un échange de chaleur, et dans lequel l'alcool est ajouté à l'huile blanchie pendant le temps de transit de l'étape de blanchiment sur le chemin vers l'étape de désodorisation.

9. Procédé selon l'une des revendications précédentes, dans lequel des dérivés d'alcool halogéné, comme le chlorure d'éthyle ; le 3-chloropropane-1,2-diol, le 2,3-dichloropropan-1-ol, le 1,3-dichloropropan-2-ol ou le 1,2,3-trichloropropane sont éliminés en continu du procédé.

10. Procédé selon l'une des revendications précédentes, dans lequel l'huile végétale est une huile végétale alimentaire.

11. Procédé selon l'une des revendications précédentes, dans lequel l'huile est sélectionnée dans le groupe constitué d'huile de palme, d'huile de soja, d'huile de colza, d'huile de canola, d'huile de tournesol, d'huile de noix de coco, d'huile de palmiste, d'huile de coton, d'huile de cacahuète, d'huile d'arachide, et de combinaisons de ces dernières.

12. Procédé selon l'une des revendications précédentes, dans lequel l'huile raffinée, blanchie et/ou désodorisée comprend moins d'un ppm, de préférence moins de 0.3 ppm de monochloropropanediol (MCPD), en particulier de diesters de 3-MCPD.
